# EUROPÄISCHE PATENTANMELDUNG

(11) **EP 3 213 634 A1**
(43) Veröffentlichungstag der Anmeldung: **06.09.2017**
(21) Anmeldenummer: 16158700.1
(22) Anmeldetag: 04.03.2016
(51) Int. Cl.: A01N 25/30

(54) **VERWENDUNG VON POLYETHER MODIFIZIERTEN KURZKETTIGEN SILOXANEN IN DER LANDWIRTSCHAFT ZUR ERHÖHUNG DES ERNTEERTRAGES**

(71) Anmelder: Evonik Degussa GmbH, 45128 Essen (DE)
(72) Erfinder: HAENSEL, Rene,, 46282 Dorsten, (DE); KRUSE, Daniela,, 44577 astrop-Rauxel, (DE); SIEVERDING, Ewald,, 55578 St. Johann, (DE); RIEDL, Carsten,, 44809 Bochum, (DE); SAMSO LUDWIG, Jordi,, 17130 L'Escala (ES)

(57) **Zusammenfassung**

Verwendung von Polyether modifizierten kurzkettigen Siloxanen in der Landwirtschaft zur Steigerung des agronomischen Ertrages, Verfahren zur Bewässerung und Kit enthaltend mindestens ein Polyether modifiziertes kurzkettiges Siloxan und ein Bewässerungssystem.

## Beschreibung

### Beschreibung der Erfindung:

Landwirtschaftliche Produktionsraten sind in der Vergangenheit z. B. durch gesteigerte Pestizideinsätze, höheren Düngemitteleinsatz pro Hektar oder durch effektivere Bewässerungssysteme kontinuierlich gesteigert worden. Diese globalen Wachstumsraten sind allerdings über die letzten zwei Jahrzehnte kleiner geworden. Weltweit steigt dagegen der Lebensmittelbedarf deutlich an, so dass sich eine Diskrepanz bildet. Gründe für die Abnahme der globalen landwirtschaftlichen Wachstumsraten sind zum einen der Verlust an kultivierbarem Land aufgrund von Urbanisierung und zum anderen die Abnahme an Bodenfruchtbarkeit. Letztere kann man zurückführen auf zunehmende extreme Wetterbedingungen wir Starkregen oder extreme Trockenheiten und auf menschliche Einflüsse wie die Überdüngung und die intensive Landwirtschaft. Dies führt zu Abfluss des Regenwassers, Bodenerosion, Bodennährstoffverlusten und zur Bodenversalzung und insgesamt zu geringeren Produktivitäten pro Hektar. (Alexandratos & Bruinsma, "World Agriculture Towards 2030/2050, ESA Working Paper No. 12-03, www.fao.org)

Ein Faktor, der die Produktivität pro Hektar maßgeblich mitbestimmt ist die Durchfeuchtung insbesondere der Wurzelzone. Eine gleichmäßige Feuchtigkeit der Wurzelzone ist für das Wachstum und den Ertrag der meisten Pflanzen wichtig. Diese Durchfeuchtung wird zum einen durch die Häufigkeit, die Dauer und der Gleichmäßigkeit des Niederschlags oder der Bewässerung bestimmt. Daher können z. B. Tröpfchenbewässerungen unter bestimmten Bedingungen zu deutlichen Ertragssteigerungen auch gegenüber herkömmlichen Beregnungsanlagen führen. Neben der Art und Weise der Bewässerung ist die Durchfeuchtung aber auch von chemischen, physikalischen und biologischen Eigenschaften des Bodenprofils abhängig. Sie beeinflussen die Infiltration und Retention von Wasser und wässrigen Flüssigkeiten im Bodenprofil.

Infitration und Retention von Wasser ist besonders auf hydrophoben Böden reduziert. Hydrophobe Böden sind in mittleren Breiten bereits weiträumig verbreitet und werden sich im Zuge des Klimawandels weiter ausbreiten. Gefährdet sind insbesondere sandige Böden unter Nadelwald, Laubwald und Gras. Daher ist in der Vergangenheit die Steigerung der Infitration und Retention von Wasser durch Zusatz von Netzmitteln besonders für hydrophobe Böden untersucht worden. Auf hydrophoben Böden ist das Pflanzenwachstum teilweise stark eingeschränkt, da die Oberflächenchemie der Böden einer Hydrierung entgegen steht. Über Jahrzehnte wurden anionische Netzmittel wie Seife oder milde Detergentien genutzt, um die Wasserinfiltration hydrophober Böden zu verbessern. Allerdings sind viele dieser Substanzen phytotoxisch und können die Bodenstruktur ungünstig beeinflussen (US2015/045225). Auf intensiv genutzten Flächen aber auch im Bereich von hydrophoben Pflanzsubstraten werden nicht-ionische Netzmittel wie alkoxylierte Polyole, Glucoether, ethoxylierte und/oder propoxylierte und/oder aromatische Alkohole/C8-C22 Fettalkohole, Alkylpolyglykoside wie z. B. anionische Carboxylester von Alkylpolyglycosides, alkylierte Polyglycosid Ethercarboxylate, alkylierte Polyglycosidphosphate, Betaine, Sulfate, alkylierte Sulfosuccinate, Sulfonates, Öle mit hoher Terpenkonzentration, Terpenalkoxylate oder auch nicht ionische Alkylenoxid-(Block)Copolymere eingesetzt (WO 2013110552).

Trisiloxantenside haben die allgemeine Struktur Me3SiO-SiMeR-OSiMe3, wobei der Rest R ein Polyetherradikal darstellt. Die überwiegende Verwendung von Trisiloxantensiden, wie z. B. dem BREAK-THRU@ S-240, Evonik Industries AG, ist ihr Einsatz im Pflanzenschutz. Sie emiedrigen die statische Oberflächenspannung von Wasser signifikant stärker als die oben genannten Produkte. Unter dem Begriff Oberflächenspannung wird im Stand der Technik die statische Oberflächenspannung verstanden. Beispielsweise bei Trisiloxanen liegt die statische Oberflächenspannung bei einer Dosierung von 0,05 Gewichtsprozent in Wasser bei ca. 20 bis 25 mN/m.

Neben dem Einsatz von Netzmitteln im Bereich der Bewässerung von Grünflächen, werden Netzmittel deutlich seltener auch in der Bewässerung von landwirtschaftlich genutzten Flächen eingesetzt. Der Fokus von Netzmittelanwendungen liegt im Agrarsektor insbesondere im Bereich Pflanzenschutz (US2014/0242197), aber auch in der besseren Durchfeuchtung der Wurzelzone (CA2769988), in der generellen Verbesserung der Pflanzengesundheit und in dem besseren Pflanzen- und/oder Wurzelwachstums, (US2010/0144534, AU2013201540), in dem besseren Fortbestand von Pflanzen und in der gesteigerten mikrobiellen Aktivität im Boden. Bei diesen Anwendungen werden Einsatzmengen zwischen 5 und 100 l/ha beschrieben, vorzugsweise 10 bis 20 l/ha (AU2013201540).

In der Praxis werden Bewässerungszusätze oft einem Tank mit Wasser oder auch Nährstofflösungen als Inhalt zugegeben und unter gelindem Rühren in der Bewässerungs-/ oder Düngerlösung verteilt, um die gewünschte Menge an Netzmittel auf die vorgegebene Feldflächen über die Mikrobewässerungssysteme verteilen zu können. Die Adjuvantien werden hierbei entweder vor dem Tankmixvorgang in die Nährstoffformulierung mit einformuliert oder als separate Tankmischungsadditive der Nährstofflösung/- brühe beigemengt. Mikrobewässerungssysteme sind entweder Nieder- oder Mediumdrucksysteme, die Wasser in Form von Spray, Nebel, Beregnung oder Tröpfchen liefern. Dabei kommen verschiedene technische Wasserauslässe wie Mikrosprüher, Vernebler, Zerstäuber, Mikro- und Miniberegner, Tropfer, Bewässerungsschläuche und andere zum Einsatz. Durch die Wahl des Tropfer kann die Emittierrate pflanzenspezifisch eingestellt werden, da viele landwirtschaftlich und gartenbautechnisch genutzte Pflanzen sehr unterschiedliche Anforderungen an ihre Wasserversorgung haben. Mikroirrigiersysteme bestehen aus Rohren, Schläuchen, Wasser-emitierenden Geräten, Durchflussregelungssystemen, Installationsgeräten, Verbindungen und weiterem Zubehör. Beregnungsanlagen sind global die am weitesten verbreiteten Bewässerungssysteme, wobei die Tröpfchenbewässerung insbesondere in Gegenden mit Wasserknappheit vorteilhaft ist.

Um das landwirtschaftliche Potential und die Wirkungen von Substanzen beurteilen zu können, sind neben Labor- und Gewächshausuntersuchungen realistische Anwendungen in der Landwirtschaft am Beispiel von Feldversuchen bevorzugt.

Nachteile des Standes der Technik sind, dass herkömmlich genutzte Netzmittel insbesondere nur auf hydrophoben Böden getestet und deren Einsatzmengen in der Landwirtschaft sehr groß und damit für den Landwirt umständlich zu nutzen und teuer sind. Polyether modifizierte kurzkettige Siloxane, insbesondere Trisoloxane, werden bisher in der landwirtschaftlichen Bewässerung nicht zur Steigerung der agronomischen Ausbeute eingesetzt. Aufgrund des steigenden globalen Lebensmittelbedarfs und der für die Landwirtschaft begrenzten Fläche, wird immer mehr Wert auf eine steigende hektarbezogene Ausbeutesteigerung gelegt.

Unter "leicht biologisch abbaubar" wird im Umfang der vorliegenden Erfindung die Abbaubarkeit nach OECD Methode 301 F CD verstanden, bevorzugt wie in EP15172382A (eingereicht am 16.06.2015) beschrieben.

Unter dem Wort Boden wird im Umfang der vorliegenden Erfindung nicht nur natürlich vorkommende Böden wie Mutterboden oder Lehm sondern auch jegliches Substrat verstanden, das zum Pflanzenwachstum eingesetzt wird.

Aufgabe der vorliegenden Erfindung war es zumindest einen Nachteil des Standes der Technik zu überwinden.

Überraschenderweise wurde gefunden, dass die Zugabe von Polyether modifizierten kurzkettigen Siloxanen zu dem zur Bewässerung von Pflanzen verwendeten Wasser die agronomische Ausbeute bei sehr geringen Auftragsmengen auf verschiedenen landwirtschaftlich genutzten Böden deutlich gesteigert werden kann.

Die erfindungsgemäßen Gegenstände werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Werden nachfolgend Mittelwerte angegeben, so handelt es sich, wenn nicht anderes angegeben, um Gewichtsmittel. Werden nachfolgend Parameter angegeben, die durch Messung bestimmt wurden, so wurden die Messungen, wenn nicht anders angegeben, bei einer Temperatur von 25 °C und einem Druck von 101.325 Pa durchgeführt.

Gegenstand der vorliegenden Erfindung ist die Verwendung von Polylether modifizierten kurzkettigen Siloxanen gemäß Formel (I)

MₐD_{b}D'_{c} Formel (I)

mit M = R¹₃SiO_{1/2}, D = R¹₂SiO_{2/2}, D' = R¹R²SiO_{2/2},
wobei
a gleich 2
b gleich 0 bis 0,5, bevorzugt 0 bis 0,1, insbesondere bevorzugt 0
c gleich 1 bis 3, bevorzugt 1 bis 2, mehr bevorzugt 1,0 bis 1,15, weiter mehr bevorzugt 1,0 bis 1,10, insbesondere bevorzugt 1,0 bis 1,05 ist,
R¹ unabhängig voneinander Kohlenwasserstoff mit 1 bis 8 Kohlenstoffatomen, bevorzugt Methyl-, Ethyl-, Propyl-, oder Phenyl-Reste, insbesondere bevorzugt Methyl-Reste
R² unabhängig voneinander ein Polyether-Rest der Formel (II)

   -R³O[CH₂CH₂O]ₘ[CH₂CH(CH₃)O]ₙ R⁵ Formel (II)

   wobei
m = 2 bis 30, bevorzugt 2 bis 20, mehr bevorzugt 3,4 bis 11,0, weiter mehr bevorzugt 3,6 bis 9,9, besonders bevorzugt 4,5 bis 8,5,
n = 0 -10, bevorzugt 2,5 bis 8,0, mehr bevorzugt 2,7 bis 7,5, besonders bevorzugt 3,0 bis 6,0, jedoch mit den Maßgaben, dass gilt:
R³ unabhängig voneinander divalente Kohlenwasserstoffreste mit 2 bis 8 Kohlenstoffatomen, bevorzugt Ethylen-, Propylen- 1-Methylpropylen-, 1,1-Dimethylpropylen-Rest, insbesondere bevorzugt -CH₂CH₂CH₂-,
R⁵ unabhängig voneinander Kohlenwasserstoffrest mit 1 bis 16 Kohlenwasserstoffen oder Wasserstoff, bevorzugt Wasserstoff oder Methyl ist,
   und für den Fall dass n größer 0 ist
m/n = 1 bis 30, bevorzugt 1,5 bis 15, mehr bevorzugt 1,8 bis 5, insbesondere bevorzugt 1,9 bis 2,8 und für alle beanspruchten Werte für n gilt für den Fall, dass c größer oder gleich 1,2 ist
c*(m+n) = 12 bis 50, bevorzugt 13 bis 40, insbesondere bevorzugt 14 bis 25 zur Erhöhung der agronomischen Ausbeute.

Die Verwendung der Polyether modifizierten kurzkettigen Siloxane der Formel (I) ist beschränkt auf die Anwendung im Wurzelbereich. Bevorzugt werden die Polyether modifizierten kurzkettigen Siloxane der Formel (I) ausschließlich bei der Bewässerung, mehr bevorzugt zusammen mit dem Bewässerungswasser ausgebracht. Insbesondere bevorzugt ist, dass keine Anwendung der Polyether modifizierten kurzkettigen Siloxane der Formel (I) auf oder an den Blättern erfolgt.

Die agronomische Ausbeute im Sinne der vorliegenden Erfindung ist unmittelbar mit dem agronomischen Ziel verknüpft und bedeutet bevorzugt, dass der Ertrag gesteigert wird. Derartige Ertragssteigerungen können sich auf die Masse der Pflanze oder Teile davon beziehen, wie auch auf die Anzahl von Teilen der Pflanze.

Weiter bevorzugt sind die verwendungsgemäßen Polyether modifizierten kurzkettigen Siloxane der Formel (I) für die Indices der Formel (II), m bevorzugt 5 bis 15, mehr bevorzugt 8 bis 12 und n bevorzugt 1 bis 6, mehr bevorzugt 2 bis 5.

Bevorzugt besitzt der Polyetherrest berechnet ohne R³O und berechnet ohne R⁵ eine Molmasse M (PE) berechnet sich nach 44 g/mol * m + 58 g/mol * n, wobei sich die Indices m und n auf Formel (II) beziehen.

Die bevorzugten Werte für M (PE) sind: Untere Grenzen M (PE) größer als 520 g/mol, bevorzugt größer als 530 g/mol, mehr bevorzugt größer als 535 g/mol; obere Grenze M (PE) kleiner als 660 g/mol, bevorzugt kleiner als 630 g/mol mehr bevorzugt kleiner als 600 g/mol.

Bevorzugt ist der Wert für M (PE) größer als 520 g/mol und kleiner als 660 g/mol, insbesondere größer als 535 g/mol und kleiner als 600 g/mol.

Für den Fall von c gleich 1 bis unter 1,2 in Formel (I) bevorzugt ist die Summe m + n bevorzugt größer 9 bis zu 19, mehr bevorzugt größer 9,5 bis zu 15 und insbesondere bevorzugt größer 10 bis zu 12.

Mehr bevorzugt ist R⁵ gleich Wasserstoff und der der Wert für M (PE) größer als 520 g/mol und kleiner als 660 g/mol, insbesondere bevorzugt ist R₅ gleich Wasserstoff und der Wert für M (PE) größer als 535 g/mol und kleiner als 600 g/mol.

Besonders bevorzugt weisen die Polyether modifizierten kurzkettigen Siloxane der Formel (I) einen Index c zwischen 1 und 1,05 auf, wobei die Indices des Polyetherestes nach Formel (II) sind m von 3,4 bis 11,0 und n von 2,5 bis 8,0.

Besonders bevorzugt weisen die Polyether modifizierten kurzkettigen Siloxane der Formel (I) einen Index c zwischen 1 und 1,05 auf, wobei das Verhältnis m/n ist 0,8 bis 2,8, insbesondere 1,9 bis 2,8.

Insbesondere bevorzugt weisen die Polyether modifizierten kurzkettigen Siloxane der Formel (I) einen Index c zwischen 1 und 1,05 auf, wobei die Molmasse des Polyetherrestes M(PE) größer als 520 g/mol und kleiner als 660 g/mol ist.

Insbesondere bevorzugt weisen die Polyether modifizierten kurzkettigen Siloxane der Formel (I) einen Index c zwischen 1 und 1,05 auf, wobei der Rest R⁵ gleich Wasserstoff ist.

Insbesondere bevorzugt weisen die Polyether modifizierten kurzkettigen Siloxane der Formel (I) einen Index c zwischen 1 und 1,05 auf, wobei die Molmasse des Polyetherrestes M(PE) größer als 520 g/mol und kleiner als 660 g/mol und der Rest R⁵ ist gleich Wasserstoff ist.

Bevorzugt werden keine weiteren Polyether modifizierten Siloxane außer denen nach Formel (I) erfindungsgemäß verwendet.

Die biologische Abbaubarkeit wird vorzugsweise bestimmt nach der OECD 301 F Methode bestimmt. Mehr bevorzugt wird die biologische Abbaubarkeit nach OECD 301 F nach 28 d bei 22°C bestimmt. Insbesondere bevorzugt wird die biologische Abbaubarkeit wie in EP15172382A (eingereicht am 16.06.2015),insbesondere in den dortigen Beispielen beschrieben bestimmt.

Bevorzugt weisen die Polyether modifizierten kurzkettigen Siloxane gemäß Formel (I) eine biologische Abbaubarkeit von größer 60%, weiter mehr bevorzugt von größer oder gleich 63% und insbesondere bevorzugt von größer oder gleich 65% auf, wobei der Maximalwert 100% beträgt.

Bestimmte Polyether modifizierte kurzkettige Siloxane der Formel (I) erfüllen gemäß OECD 301 F die Bedingungen zur leichten biologischen Abbaubarkeit. Diese ist erfüllt, wenn nach 28 Tagen > 60% des Produktes biologisch abgebaut wurde. Diese Zusammensetzungen, welche die OECD 301 F Bedingungen erfüllen, werden wie folgt beschrieben.

Bevorzugt weisen die erfindungsgemäßen Zusammensetzungen die Polyether modifizierten Siloxane der Formel (I) auf, wobei der Index d 1,0 bis 1,05 ist und eine biologische Abbaubarkeit dieser Siloxane ist größer als 60%.

Besonders bevorzugt weisen die Polyether modifizierten kurzkettigen Siloxane der Formel (I) eine biologische Abbaubarkeit von größer als 60% auf, weiterhin ist der Index c zwischen 1 und 1,05, wobei die Molmasse des Polyetherrestes M(PE) größer ist als 520 g/mol und kleiner als 660 g/mol und der Rest R⁵ ist gleich Wasserstoff.

Besonders bevorzugt weisen die Polyether modifizierten kurzkettigen Siloxane der Formel (I) eine biologische Abbaubarkeit von größer als 60% auf, weiterhin ist der Index c zwischen 1 und 1,05, wobei die Molmasse des Polyetherrestes M(PE) größer als 520 g/mol und kleiner als 660 g/mol ist, der Rest R⁵ gleich Wasserstoff

Die Herstellung der Polyether modifizierten kurzkettigen Siloxane der Formel (I) erfolgt durch Hydrosilylierungsreaktion nach dem Stand der Technik. Zur Herstellung der Polyether modifizierten kurzkettigen Siloxane der Formel (I) bei denen der Index c gleich 1,0 bis 1,15 ist, wir das erfindungsgemäße Verfahren der EP15172382A (eingereicht am 16.06.2015) und seiner analogen Ausführungsmöglichkeiten unter Verwendung geeigneter Polyether benutzt.

Weiterhin bevorzugt ist die erfindungsgemäße Verwendung von Polyether modifizierten kurzkettigen Siloxanen der Formel (I) bei der Bewässerung in der Landwirtschaft.

Weiterhin bevorzugt ist die erfindungsgemäße Verwendung von Polyether modifizierten kurzkettigen Siloxanen der Formel (I) zur Verringerung der Variabilität der Ernteergebnisse und Stabilisierung auf einem höherem Niveau im Vergleich zu identischen Bewässerungen ohne Verwendung von Polyether modifizierten kurzkettigen Siloxanen der Formel (I).

Im Umfang der vorliegenden Erfindung wird unter Variabilität der Ernteergebnisse verstanden, dass die agronomischen Erträge ohne erfindungsgemäße Verwendung von Vegetationsperiode zu Vegetationsperiode bei sonst vergleichbaren Bedingungen variieren. Stabilisierung der Ernteergebnisse bedeutet, dass der durchschnittliche Ertrag auf ein und derselben Fläche unterschiedlicher Vegetationsperioden bei erfindungsgemäßer Verwendung steigt, bevorzugt steigt der agronomische Ertrag um mindestens 3 %, mehr bevorzugt um mindestens 5 % und insbesondere bevorzugt um mindestens 7%.

Weiterhin bevorzugt ist die erfindungsgemäße Verwendung von Polyether modifizierten kurzkettigen Siloxanen der Formel (I) nach einem der Ansprüche 1 bis 3, wobei eine Menge von 0,25 - 100 l/ha mit der Bewässerung eingesetzt wird, bevorzugt 0,75 - 20 l/ha, insbesondere bevorzugt 1 - 12 l/ha.

Weiterhin bevorzugt ist die erfindungsgemäße Verwendung von Polyether modifizierten kurzkettigen Siloxanen der Formel (I), wobei die landwirtschaftlichen Kulturen auf beliebigen Böden, bevorzugt humushaltige, sandige, tonhaltige oder lehmhaltigen Böden und Pflanzensubstraten durchgeführt wird.

Weiterhin bevorzugt ist die erfindungsgemäße Verwendung von Polyether modifizierten kurzkettigen Siloxanen der Formel (I), wobei sowohl einjährige, zweijährige, mehrjährige oder ausdauernde Pflanzen kultiviert werden.

Bevorzugte landwirtschaftliche Einsatzgebiete sind der Ackerbau, der Garten- und Zierpflanzenbau und der Weinbau. Besonders bevorzugt ist der Obst- und Gemüsebau. Bevorzugtes Obst ist Kernobst, Steinobst, Beerenobst und Schalenobst. Bevorzugtes Gemüse ist Wurzelgemüse, Sprossgemüse, Knollengemüse, Zwiebelgemüse, Blattstielgemüse, Blattgemüse, Blattsalate, Samengemüse, Fruchtgemüse.

Ein weiterer Gegenstand der vorliegenden Erfindung ist ein Verfahren zur Steigerung der agronomischen Ausbeute durch Zusatz von Polyether modifizierten kurzkettigen Siloxanen der Formel (I) zum Bewässerungssystem, indem der Zusatz periodisch erfolgt.

Bevorzugt ist ein erfindungsgemäßes Verfahren wobei die Applikation von Polyether modifizierten kurzkettigen Siloxanen der Formel (I) nicht kontinuierlich erfolgt.

Bevorzugt ist ein erfindungsgemäßes Verfahren wobei die Applikation von Polyether modifizierten kurzkettigen Siloxanen der Formel (I) mehrfach im Abstand von 7 bis 14 Tagen erfolgt, mehr bevorzugt im Abstand von 9 bis 12 Tagen.

Bevorzugt ist ein erfindungsgemäßes Verfahren wobei die Applikation von Polyether modifizierten kurzkettigen Siloxanen der Formel (I) in einer Gesamtmenge von 0,25 - 100 l/ha mit der Bewässerung erfolgt, bevorzugt 0,75 - 20 l/ha, insbesondere bevorzugt 1 - 12 l/ha

Mehr bevorzugt erfolgt die Applikation periodisch durch Zugabe der Polyether modifizierten kurzkettigen Siloxane zum Bewässerungswasser, wobei die Polyether modifizierten kurzkettigen Siloxane innerhalb von 6 Stunden an die Pflanzen appliziert werden, mehr bevorzugt innerhalb von 4 Stunden, besonders bevorzugt innerhalb von 2 Stunden.

Bevorzugt ist ein erfindungsgemäßes Verfahren wobei die Applikation von Polyether modifizierten kurzkettigen Siloxanen der Formel (I) mehrfach im Abstand von 7 bis 14 Tagen und in einer Gesamtmenge von 1 - 12 l/ha erfolgt.

Die Applikation der Polyether modifizierten kurzkettigen Siloxane wird bevorzugt gemeinsam mit weiteren Zusatzstoffen wie Nährstoffen oder Bodenhilfsstoffen durchgeführt. Bevorzugte Nährstoffe sind NPK Dünger oder NPK enthaltende Dünger, insbesondere Dünger, die neben NPK weitere Spurenelemente enthalten. Bevorzugte Bodenhilfsstoffe sind Kationaustauscher, Zusatzstoffe zur pH-Regulation, oder auch nützliche Bakterien.

Besonders bevorzugt erfolgt die Applikation der Polyether modifizierten kurzkettigen Siloxane nicht gemeinsam mit Herbiziden, Fungiziden, Nematozoiden und Insektiziden.

Bevorzugt sind die Bewässerungssysteme ausgewählt unter Mikrobewässerungssystemen, insbesondere Sprinkler- und Drip-Systemen.

Ein weiterer Gegenstand der vorliegenden Erfindung ist ein Kit enthaltend ein Bewässerungssystem, Wasser und mindestens ein Polyether modifiziertes kurzkettiges Siloxan der Formel (I).

Bevorzugt ist ein erfindungsgemäßes Kit, wobei das Polyether modifizierte kurzkettige Siloxan der Formel (I) biologisch abbaubar ist.

Bevorzugt weisen die Polyether modifizierten kurzkettigen Siloxane gemäß Formel (I) eine biologische Abbaubarkeit von größer 60%, weiter mehr bevorzugt von größer oder gleich 63% und insbesondere bevorzugt von größer oder gleich 65% auf, wobei der Maximalwert 100% beträgt.

Mehr bevorzugt ist ein erfindungsgemäßes Kit, wobei das Bewässerungssystem ein Mikrobewässerungssystem ist und das Polyether modifizierte kurzkettige Siloxan der Formel (I) biologisch Abbaubarkeit von mehr als 60% aufweist.

Die Ergebnisse zeigen, dass die erfindungsgemäße Anwendung eines Polyether modifizierten kurzkettigen Siloxans der Formel (I) eine deutliche agronomische Ausbeutesteigerung gegenüber der vergleichbaren nicht erfindungsgemäßen Bewässerung ohne Polyether modifiziertes kurzkettiges Siloxan der Formel (I) bewirkt.

Überraschender Weise zeigte sich die agronomische Ausbeutesteigerung nicht ausschließlich in einer Zunahme der Fruchtgröße, sondern auch in einer Zunahme der Blüten und Fruchtanzahl bestand.

Es wurden Tomaten und Salat untersucht. Die verwendungsgemäßen Vorteile werden auch an Paprika, Erdbeeren, Kiwis und Zitrusgewächsen beobachtet.

Besonders landwirtschaftlich empfindliche und schwierige Kulturen, wie z. B. Tomaten, profitieren vom Einsatz der erfindungsgemäßen Verwendung der Polyether modifizierte kurzkettigen Siloxane.

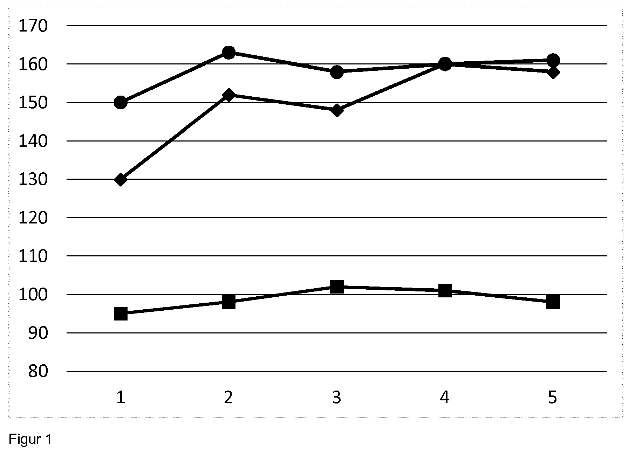

Figur 1 zeigt die Anzahl der Blüten auf den Feldern A (Quadrate), B (Rauten) und P (Kreise) über die Ansätze nach Tabelle 1. Für die Anzahl der Blüten auf Feld B ist einen Dosiseffekt gezeigt. Dabei konnten bei der dreifachen Behandlung mit 2 l/ha die meisten Blüten gezählt werden. Der durchschnittliche Anstieg der Blütenanzahl in allen drei Feldern liegt bei 10 %. Der Anstieg der Blütenzahl weist auf eine mögliche Verlängerung der Ernteperiode hin, wodurch die unten gezeigte Ausbeutesteigerung noch weiter erhöht werden könnte.

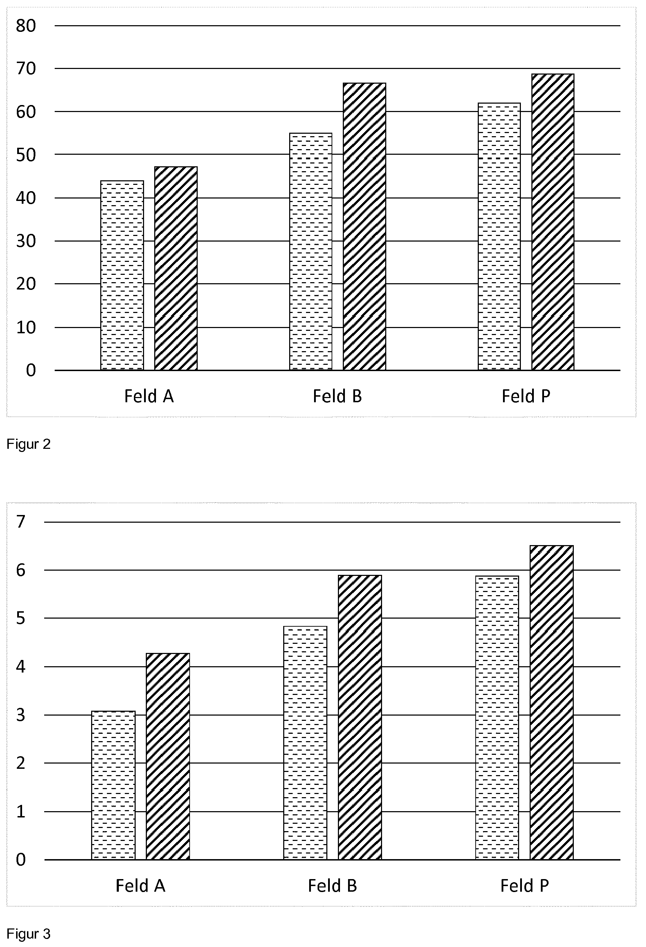

Figur 2 zeigt die graphische Darstellung der Werte der Tabelle 2 der Anzahl der Früchte, wobei die Kontrolle gestrichelt dargestellt ist und diagonal gestreift verwendungsgemäß ist. Im Mittel war die Anzahl der geernteten Früchte von den mit BREAK-GARD behandelten Pflanzen um 13 % höher als die Anzahl der geernteten Früchte von den Kontrollpflanzen ohne Behandlung.
Figur 3 zeigt die graphische Darstellung der Werte der Tabelle 2 der Masse der Früchte in kg, wobei die Kontrolle gestrichelt dargestellt ist und diagonal gestreift verwendungsgemäß ist. Die Masse der geernteten Früchte war von den mit BREAK-GARD behandelten Pflanzen im Mittel um 24 % höher als die der Früchte von den Kontrollpflanzen.

### Beispiele

| Allgemeine Methoden und Materialien: | |
|---|---|
| Handelsbezeichnung | |
| BREAK-GARD^{®} IR 100 | Produkt und Warenzeichen der Evonik Degussa GmbH, Deutschland |

### Feldversuche zur Ermittlung der agronomischen Ausbeuteerhöhung

Als Testsystem für die Ausbeuteerhöhung wurde der Anbau von Tomaten gewählt. Tomaten sind kompliziert im Anbau, da sie anfällig gegenüber verschiedenen Einflüssen während des Wachstums sind. Eine Steigerung der Ausbeute in diesem hochpreisigen Segment ist daher besonders erstrebenswert.

Die offenen Feldversuche wurden an drei Standorten unter vergleichbaren meteorologischen Bedingungen mit zwei verschiedenen Bodenarten durchgeführt. Eine Bodenarten war eine schwere, überwiegend aus Ton bestehende Bodenart (Feld A und B), die anfällig für Staunässe ist und die andere war ein loser auch überwiegend aus Ton bestehender Boden (Feld P). Es wurden Tomaten mit einer Pflanzdichte von ca. 31.000 Pflanzen pro Hektar, einem Abstand zwischen den Pflanzen in einer Linie von 0,35 m, einem Abstand von 0,4 m in den Doppellinien und einem Abstand zwischen den Doppelreihen von 1,8 m angepflanzt. Die Bewässerung, Düngung und Applikationen der Testsubstanzen erfolgten durch Tröpfchenbewässerung mit 1,6 l/h und einem Auslass alle 40 cm. Die Applikationen erfolgten 10 Tage / 20 Tage / 37 Tage / 47 Tage und 57 Tage nach dem Einpflanzen der Setzlinge. Die Applikationshäufigkeit und Mengen wurden so variiert, dass die finalen Mengen zwischen 3 und 10 l/ha lagen. Vier Monate nach dem Einpflanzen wurden die Tomaten geerntet. Es wurden folgende Daten ermittelt, um die Ernte und den Effekt des Produktes zu ermitteln: die Anzahl der Blüten pro Pflanze und die Anzahl und das Gewicht der roten und der grünen Tomaten.

Jeder der drei Versuche bestand aus 5 Ansätzen, von dem einer die Kontrolle war, bei der die Pflanzen die Applikation nicht erhalten haben. Jeder Ansatz bestand aus 20 Pflanzen (10 Pflanzen x 2)

**Tabelle 1: Definition der Ansätze**

| Ansatz | Anzahl | Applikationstage | Menge pro Applikation |
|---|---|---|---|
| 1 | 0 | keine | |
| 2 | 3 | 10. Tag, 37. Tag, 57. Tag | 1 l/ha |
| 3 | 5 | 10. Tag, 20. Tag, 37. Tag, 47. Tag, 57. Tag | 1 l/ha |
| 4 | 3 | 10. Tag, 37. Tag, 57. Tag | 2 l/ha |
| 5 | 5 | 10. Tag, 20. Tag, 37. Tag, 47. Tag, 57. Tag | 2 l/ha |

Die agronomischen Ausbeuten von jedem der fünf Versuchsansätze wurden pro Versuch ermittelt. Dabei wurden die Mittelwerte der jeweils beiden Replikate berechnet und dokumentiert.

**Tabelle 2: Ausbeuten der Felder A, B und P mit den Ansätzen 1 bis 5 der Tabelle 1, Masse in kg**

| | Anzahl | Masse | Anzahl | Masse | Anzahl | Masse | Anzahl | Masse | Anzahl | Masse |
|---|---|---|---|---|---|---|---|---|---|---|
| Ansatz | 1 | | 2 | | 3 | | 4 | | 5 | |
| Feld A | | | | | | | | | | |
| Blüten | 95 | | 98 | | 102 | | 101 | | 98 | |
| Rote Früchte | 40 | 2,95 | 43 | 3,83 | 42 | 3,88 | 42 | 3,85 | 41 | 3,95 |
| Grüne Früchte | 4 | 0,13 | 6 | 0,41 | 5 | 0,36 | 5 | 0,408 | 5 | 0,42 |
| Feld B | | | | | | | | | | |
| Blüten | 130 | | 152 | | 148 | | 160 | | 158 | |
| Rote Früchte | 50 | 4,6 | 58 | 5,2 | 57 | 5,08 | 57 | 5,01 | 58 | 5,8 |
| Grüne Früchte | 5 | 0,23 | 10 | 0,65 | 8 | 0,6 | 9 | 0,71 | 10 | 0,52 |
| Feld P | | | | | | | | | | |
| Blüten | 150 | | 163 | | 158 | | 160 | | 161 | |
| Rote Früchte | 50 | 4,8 | 54 | 5,45 | 53 | 5,5 | 55 | 5,01 | 54 | 5,25 |
| Grüne Früchte | 12 | 1,08 | 15 | 1,25 | 14 | 1,23 | 15 | 1,2 | 15 | 1,15 |

Feld A und Feld B unterschieden sich in der Intensität der Bodenbearbeitung vor dem Setzen der Planzen.

Feld A war ein nur oberflächlich gelockerter Boden etwa im Bereich von 5 cm, derweil Feld-B tiefgreifend bearbeitet wurde bis in eine Tiefe von etwa 20 cm.

Figur 1 zeigt bei der Anzahl der Blüten auf Feld B einen Dosiseffekt. Dabei konnten bei der dreifachen Behandlung mit 2 l/ha die meisten Blüten gezählt werden. Der durchschnittliche Anstieg der Blütenanzahl in allen drei Feldern liegt bei 10 %. Der Anstieg der Blütenzahl weist auf eine mögliche Verlängerung der Ernteperiode hin, wodurch die unten gezeigte Ausbeutesteigerung noch weiter erhöht werden könnte.

Bei der agronomischen Ausbeutebestimmung durch die Anzahl und dem Gewicht der Früchte konnte kein Dosiseffekt beobachtet werden. Daher wurden die Effekte aller Anwendungen zusammengefasst und dargestellt. Eine Anwendung von insgesamt 3 l/ha war in diesem Beispiel ausreichend, um eine deutliche Ausbeutesteigerung zu erzielen.

Figur 2 zeigt, dass im Mittel die Anzahl der geernteten Früchte von den mit BREAK-GARD behandelten Pflanzen um 13% höher war als die Anzahl der geernteten Früchte von den Kontrollpflanzen ohne Behandlung.

Figur 3 zeigt, dass das Gewicht der geernteten Früchte ist von den mit BREAK-GARD behandelten Pflanzen im Mittel um 24 % höher war als das der Früchte von den Kontrollpflanzen.

## Patentansprüche

1. Verwendung von Polyether modifizierten kurzkettigen Siloxanen gemäß Formel (I)
MₐD_{b}D'_{c} Formel (I)
mit M = R¹₃SiO_{1/2}, D = R¹₂SiO_{2/2}, D' = R¹R²SiO_{2/2},
wobei
a gleich 2
b gleich 0 bis 0,5,
c gleich 1 bis 3, ist,
R¹ unabhängig voneinander Kohlenwasserstoff mit 1 bis 8 Kohlenstoffatomen,
R² unabhängig voneinander ein Polyether-Rest der Formel (II)
-R³O[CH₂CH₂O]ₘ[CH₂CH(CH₃)O]ₙ R⁵ Formel (II)
wobei
m = 2 bis 30,
n = 0-10,,
jedoch mit den Maßgaben, dass gilt:
R³ unabhängig voneinander divalente Kohlenwasserstoffreste mit 2 bis 8 Kohlenstoffatomen,
R⁵ unabhängig voneinander Kohlenwasserstoffrest mit 1 bis 16 Kohlenwasserstoffen oder Wasserstoff,
und für den Fall dass n größer 0 ist
m/n = 1 bis 30 und
für alle beanspruchten Werte für n gilt für den Fall, dass c größer oder gleich 1,2 ist c*(m+n) = 12 bis 50,
zur Erhöhung der agronomischen Ausbeute.

2. Verwendung von Polyether modifizierten kurzkettigen Siloxanen der Formel (I) nach Anspruch 1 bei der Bewässerung in der Landwirtschaft.

3. Verwendung von Polyether modifizierten kurzkettigen Siloxanen der Formel (I) nach einem der Ansprüche 1 oder 2 zur Verringerung der Variabilität der Ernteergebnisse und Stabilisierung auf einem höherem Niveau im Vergleich zu identischen Bewässerungen ohne Verwendung von Polyether modifizierten kurzkettigen Siloxanen der Formel (I).

4. Verwendung von Polyether modifizierten kurzkettigen Siloxanen der Formel (I) nach einem der Ansprüche 1 bis 3, wobei eine Menge von 0,25 - 100 l/ha mit der Bewässerung eingesetzt wird, bevorzugt 0,75 - 20 l/ha, insbesondere bevorzugt 1 - 12 l/ha.

5. Verwendung von Polyether modifizierten kurzkettigen Siloxanen der Formel (I) nach einem der Ansprüche 1 bis 4, wobei die landwirtschaftlichen Kulturen auf beliebigen Böden, bevorzugt humushaltige, sandige, tonhaltige oder lehmhaltigen Böden oder Substraten durchgeführt wird.

6. Verwendung von Polyether modifizierten kurzkettigen Siloxanen der Formel (I) nach einem der Ansprüche 1 bis 5, wobei sowohl einjährige, zweijährige, mehrjährige oder ausdauernde Pflanzen kultiviert werden.

7. Verwendung von Polyether modifizierten kurzkettigen Siloxanen der Formel (I) nach einem der Ansprüche 1 bis 6, wobei die Applikation gemeinsam mit weiteren Zusatzstoffen durchgeführt wird.

8. Verfahren zur Steigerung der agronomischen Ausbeute durch Zusatz von Polyether modifizierten kurzkettigen Siloxanen der Formel (I) nach Anspruch 1 zum Bewässerungssystem, indem der Zusatz periodisch erfolgt.

9. Verfahren nach Anspruch 8, wobei die Applikation von Polyether modifizierten kurzkettigen Siloxanen der Formel (I) nicht kontinuierlich erfolgt.

10. Verfahren nach einem der Ansprüche 8 oder 9, wobei die Applikation von Polyether modifizierten kurzkettigen Siloxanen der Formel (I) mehrfach im Abstand von 7 bis 14 Tagen erfolgt, mehr bevorzugt im Abstand von 9 bis 12 Tagen.

11. Verfahren nach einem der Ansprüche 8 bis 10, wobei die Bewässerungssysteme ausgewählt sind unter Mikrobewässerungssystemen, insbesondere Sprinkler- und Drip-Systemen.

12. Kit enthaltend ein Bewässerungssystem, Wasser und mindestens ein Polyether modifiziertes kurzkettiges Siloxan der Formel (I).

13. Kit nach Anspruch 12, wobei das Polyether modifizierte kurzkettige Siloxan der Formel (I) biologisch abbaubar ist.
